# EUROPÄISCHE PATENTANMELDUNG

(11) **EP 1 227 398 A2**
(43) Veröffentlichungstag der Anmeldung: **31.07.2002**
(21) Anmeldenummer: 02000975.9
(22) Anmeldetag: 16.01.2002
(51) Int. Cl.: G06F 9/445

(54) **Verfahren und Vorrichtung zur Analyse der Korrektheit von Installation und Deinstallation von Windows TM-Programmen auf einem PC**

(30) Priorität: 18.01.2001 DE 10101996
(71) Anmelder: Tenovis GmbH & Co. KG, 60362 Frankfurt am Main (DE)
(72) Erfinder: Schmidt, Ralf, 55128 Mainz (DE)
(74) Vertreter: Patentanwaltskanzlei WILHELM & BECK

(57) **Zusammenfassung**

Bekannt ist ein Verfahren zur Analyse der Korrektheit von Installationen und Deinstallationen von Windows™-Programmen auf einem PC, wobei der Konfigurationszustände des PCs vor und nach der Installation bzw. Deinstallation des Programmes erfasst und Änderungen protokolliert werden. Um die Korrektheit von unter Windows™ installierten Programmen auf einem PC zu gewährleisten, insbesondere auch nach mehrfachem Installieren und Deinstallieren einzelner Programme, ist vorgesehen, die PC-Konfigurationen vor und nach der Installation bzw. Deinstallation des Programmes durch eine Wissensbasis, die lediglich verträglich getestete Programmbibliotheken und deren SOLL-Vorgaben umfasst, mit den entsprechenden SOLL-Vorgaben verglichen und bewertet wird und als Analyseergebnis protokolliert ausgegeben wird.

## Beschreibung

Die vorliegende Erfindung betrifft ein Verfahren und Vorrichtung zur Analyse der Korrektheit von Installationen und Deinstallationen von Windows™-Programmen auf einem PC.

Bekannt ist ein Verfahren und eine Vorrichtung zur Dokumentation von Installationen bzw. Deinstallationen eines oder mehrerer Programme unter Windows™ auf einem PC, welches die Konfigurationsstände des PCs vor und nach der Installation des Programmes erfasst und die Änderungen protokolliert. Die protokollierten Änderungen beziehen sich auf verschiedene Objekte wie Dateien (Programmbibliotheken), Ordner, Schlüssel und z.B. Einträge in der Registrierungsdatenbank. Die Objekte werden dabei unterteilt in "neu hinzugekommene", "im Wert veränderte" sowie "entfernte" Objekte. Eine Bewertung der protokollierten Ergebnisse ist allerdings nicht möglich. Deshalb kann selbst eine fehlerhafte Installation verträglicher Programmbibliotheken nicht ausgeschlossen werden. Dies ist jedoch ein häufig auftretender Fehler, da das manuelle Zusammenstellen der zum Teil umfangreichen Programminstallationen durch eine Bedienperson fehleranfällig ist.

Aufgabe der vorliegenden Erfindung ist es, die Korrektheit von unter Windows™ installierten Programmen auf einem PC zu gewährleisten, insbesondere auch nach mehrfachem Installieren und Deinstallieren einzelner Programme.

Erfindungsgemäß ist dies bei einem Verfahren mit den Merkmalen des Patentanspruches 1 erreicht. Das erfindungsgemäße Verfahren weist insbesondere den Vorteil auf, dass es zur Bewertung der Korrektheit der protokollierten Installationen bzw. Deinstallationen von Programmen unter Windows™ auf eine Wissensbasis zurückgreift und somit aus dem Vergleich von drei Zuständen eine Bewertung auf Korrektheit vornimmt. Die drei Zustände sind dabei ein "IST-Zustand vorher (PC-Konfiguration vorher)", ein "IST-Zustand nachher (PC-Konfiguration nachher)" sowie ein "SOLL-Zustand (SOLL-Vorgaben der Wissensbasis für die PC-Konfiguration)". Das erfindungsgemäße Verfahren nutzt dabei eine Wissensbasis, welche nur bereits verträglich getestete Programmbibliotheken beinhaltet. Es wird somit vermieden, dass eine Installation unverträglicher Programmbibliotheken vorgenommen wird oder unverträgliche Versionen von Programmbibliotheken installiert werden. Dadurch kann die Richtigkeit bzw. Korrektheit der Installation/Deinstallation umfassend bewertet werden. Für die erfindungsgemäße Vorrichtung gilt entsprechendes.

In den weiteren abhängigen Ansprüchen finden sich weitere vorteilhafte Ausgestaltungen des erfindungsgemäßen Verfahrens.

Nachfolgend ist ein Ausführungsbeispiel des erfindungsgemäßen Verfahrens bzw. der Vorrichtung zur Analyse der Korrektheit von Installationen und Deinstallationen von Programmen unter Windows™ beschrieben; es zeigen:
- Fig. 1: die prinzipielle Struktur einer Eingabe-/Ausgabedatei gemäß dem erfindungsgemäßen Verfahren,
- Fig. 2: ein konkretes Beispiel einer Eingabe-/Ausgabedatei gemäß Fig. 1,
- Fig. 3: die prinzipielle Struktur einer Bedienoberfläche mit einem Ergebnisprotokoll für die Eingabedatei gemäß Fig. 1,
- Fig. 4: ein konkretes Beispiel der Bedienoberfläche mit einem Ergebnisprotokoll für die Eingabedatei gemäß Fig. 2, sowie
- Fig. 5: ein vereinfachtes Blockschaltbild der erfindungsgemäßen Analysevorrichtung.

Eine Wissensbasis weist ein Referenzverzeichnis mit allen möglichen gemeinsam genutzten, verträglichen Dateien bzw. Programmbibliotheken sowie in einer Ablernphase in Form von Ergebnisprotokollen bzw. Ausgabedateien erhaltene SOLL-Vorgaben bzw. -Zustände für das jeweils unter Windows™ zu installierende Programm auf einem PC auf. In dem Referenzverzeichnis sind alle verträglichen Dateien hierarchisch nach Software-Paketen, Zielverzeichnissen, Betriebssystemen und Ländervarianten, u.a. geordnet angeordnet. Dabei ist die Reihenfolge der Hierarchie prinzipiell frei wählbar, wobei die gewählte Hierarchie offensichtlich vom Verfahren zur Analyse der Installation richtig interpretiert werden muss. Würde man das Referenzverzeichnis in der Ablernphase vollständig ablernen, würde man eine Ausgabedatei bzw. eine SOLL-Vorgabe für ein sehr umfangreiches imaginäres Programm erhalten, welches alle Dateien der Wissensbasis zu installieren hätte. Die SOLL-Vorgaben für reale Programme stellen jedoch eine Untermenge dessen dar und in ihrem Umfang deutlich begrenzt. Sie lassen sich deshalb einfacher ablernen, wenn man aus dem Referenzverzeichnis bzw. einer Kopie der Referenzverzeichnisses die jeweils nicht benötigten Dateien bzw. Programmbibliotheken zuvor entfernt.

Die sich als Ergebnis der Ablernphase ergebende Wissensbasis ist dabei so realisiert, dass die SOLL-Vorgaben bzw. Eingabewerte des Analyseverfahrens im gleichen Format vorliegen wie das protokollierte und bewertete Analyseergebnis bzw. die Ausgabewerte des erfindungsgemäßen Analyseverfahrens. Die Definition der SOLL-Vorgaben für die korrekte Installation eines Programmes erfolgt deshalb in einer ASCII-Datei im INI-Format (bekanntes Windows™-Dateiformat für Initialisierungsdateien). Dies ermöglicht ein einfaches Ablernen der SOLL-Vorgaben durch Protokollierung einer Referenzinstallation in einem separaten Ablernverzeichnis, in dem alle Dateien aufgeführt sind, um gegebenenfalls eine manuelle Gegenprüfung der generierten Soll-Vorgaben mit dem Inhalt des Ablernverzeichnisses vorzunehmen. Das Ergebnisprotokoll des abgelernten Referenzverzeichnisses wird also als Eingabedatei für die zu überprüfende Programminstallation verwendet.

Die Wissensbasis beinhaltet neben den SOLL-Vorgaben für die korrekte Installation des Programmes alle gemeinsam genutzten Programmbibliotheken bzw. Dateien, welche von dem zu installierenden Programm verwendet werden dürfen, wodurch deren Verträglichkeit a priori sichergestellt ist. Verwendet ein zu installierendes Programm ausschließlich diejenigen gemeinsam genutzten verträglichen Dateien, die in der Wissensbasis aufgeführt sind, kann das erfindungsgemäße Verfahren bzw. Programm die Installation für jede Datei überprüfen und eine eindeutige Korrekt/Falsch-Aussage treffen. Dateien, welche nicht in der Wissensbasis geführt sind, werden nicht analysiert, sondern lediglich mit einer entsprechenden Warnung versehen. Denn bei derartigen Dateien ist eine eindeutige Korrekt/ Falsch-Aussage offensichtlich nicht möglich. Diese Aussage ist im übrigen meistens auch nicht erforderlich, da es sich bei derartigen Dateien normalerweise um programmspezifische Dateien handelt.

Die in den in der Ablernphase generierten Ausgabedateien bzw. SOLL-Vorgaben der Wissensbasis beschreiben die Eigenschaften der Objekte wie Dateien (Programmbibliotheken), Ordner, Schlüssel und Einträge in der Registrierungsdatenbank und dienen zur Analyse, ob
- z.B. die Datei in das richtige Zielverzeichnis installiert ist,
- bei einer zu registrierenden Komponente exakt auch die gewünschte Datei im angegebenen Pfad zu finden ist,
- die Version und die Größe der Datei korrekt sind,
- die Datei in die Registrierungsdatenbank einzutragen ist,
- die richtige Länder- und Betriebssystemvariante der Datei installiert ist, u.a..

Ob eine Datei korrekt installiert wurde, ist dabei stets von der Ausgangskonfiguration des PCs ab. Das Analyseverfahren geht davon aus, dass die auf dem PC vor der Installation einer neuen Programmbibliothek vorgefundene Konfiguration der Dateien korrekt ist. Der einfachere Fall ist gegeben, wenn die vom Verfahren herangezogene Version einer Datei nach der Installation auf dem PC vorliegt, weil sie vom Programm selbst installiert wurde, weil sie schon vor der Installation vorhanden war und nicht bearbeitet wurde, oder weil die Datei bei gleicher Version und gleicher Größe lediglich überschrieben wurde. Befand sich vor der Installation bereits eine neuere Datei auf dem PC, stellt dies das Analyseverfahren fest, indem es die PC-Konfiguration in der Ablernphase vorher ablernt und nach der Installation prüft, ob es Dateien in Paketen gibt, welche nicht installiert werden durften, um keine unzulässigen Kombinationen hervorzurufen.

Das erfindungsgemäße Verfahren berücksichtigt also, dass Dateien oftmals lediglich als Bestandteil definierter Software-Pakete oder lediglich in bestimmten Kombinationen mit anderen Dateien unter Windows™ installiert werden dürfen. Im letzteren Fall ergibt sich also eine Art Software-Paket, allerdings ein Paket logischer Art. Wird dabei eine Datei installiert, die Bestandteil dieses Software-Paketes ist, überprüft das Verfahren mittels der Wissensbasis, ob alle weiteren Dateien dieses Paketes ebenfalls installiert wurden. Verschiedene Versionen von Dateien bedingen offensichtlich die Handhabung verschiedener Versionen von Software-Paketen durch das Verfahren.

Das Verfahren beschränkt sich bei seiner Analyse der Korrektheit der Installation/Deinstallation auf diejenigen Verzeichnisse, in welche gemeinsam genutzte Dateien installiert werden. Somit wird eine Geschwindigkeitssteigerung in der Analysephase erzielt und das Ergebnisprotokoll der Installation/Deinstallation wird entsprechend übersichtlicher, da es nur die relevanten Verzeichnisse bzw. Registry-Zweige protokolliert.

Fehlerhafte Installationen können von dem erfindungsgemäßen Verfahren korrigiert werden. Dabei werden die benötigten zu korrigierenden Dateien jeweils der Wissensbasis entnommen. Aufgrund des Umfangs der Wissensbasis ist dies in der Praxis jedoch lediglich eine Notlösung und dient ausschließlich der Überbrückung der Zeitspanne, bis eine korrigierte Installation des Programmes durch die Bedienperson erstellt ist.

Das Verfahren besteht aus einem einzigen ausführbaren Programm, so dass das Verfahren keine Programmbibliotheken verwenden muss. Weiterhin werden die SOLL-Vorgaben der Wissensbasis und das Ergebnisprotokoll der Analyse bzw. das Analyseergebnis in eine einfache Textdatei geschrieben, um weder eine Datenbank installieren zu müssen inklusive der zugehörigen Programmbibliotheken noch diese in das ausführbare Programm einbinden zu müssen.

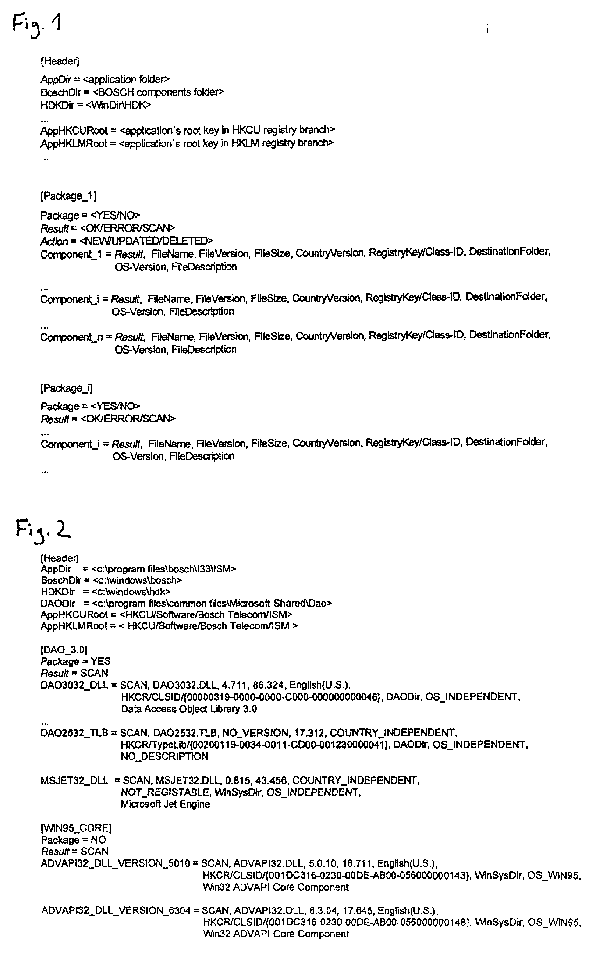

In der Ablernphase werden alle Dateien bzw. Programmbibliotheken im Referenzverzeichnis hinsichtlich ihrer Version, Größe etc. analysiert und protokolliert. Aus der logischen Baumstruktur des Referenzverzeichnisses kann das Verfahren direkt die Vorgaben für die Objekteigenschaften wie Zielverzeichnis, Betriebssystem-/Ländervariante und Zugehörigkeit zum einem Software-Paket entnehmen und ein Ergebnisprotokoll bzw. eine Eingabedatei der zu überprüfenden Programminstallation für die Analysephase gemäß Fig. 1 erstellen.

In der Sektion Header werden alle Variablen, wie z.B. das Applikationsverzeichnis AppDir, der Registry-Zweig *AppRegKeys,* u.a., definiert, um nicht das Dateisystem und die Registrierungsdatenbank des PC vollständig abprüfen zu müssen. Der Bezeichner bzw. Schlüssel *Package_i* kennzeichnet ein Software-Paket. Zur Sicherstellung der Eindeutigkeit setzt sich der Schlüssel *Package_i* wie folgt zusammen: *PackageName_PackageVersion*. Wird eine Sektion durch den Schlüssel Package=YES als Software-Paket gekennzeichnet, prüft das Verfahren in der Analysephase, ob alle Dateien dieses Software-Paketes korrekt installiert sind. Der Schlüssel *Component_i* kennzeichnet die zu installierende Datei. Zur Sicherstellung der Eindeutigkeit setzt sich der Schlüssel *Component_i* wie folgt zusammen:
*FileName_File_Extension_FileVersion* (Fig. 1).

In Fig. 2 ist eine Ausgabedatei der Ablernphase (Ergebnisprotokoll) bzw. eine Eingabedatei für die Analysephase für ein konkretes Installationsbeispiel gezeigt.

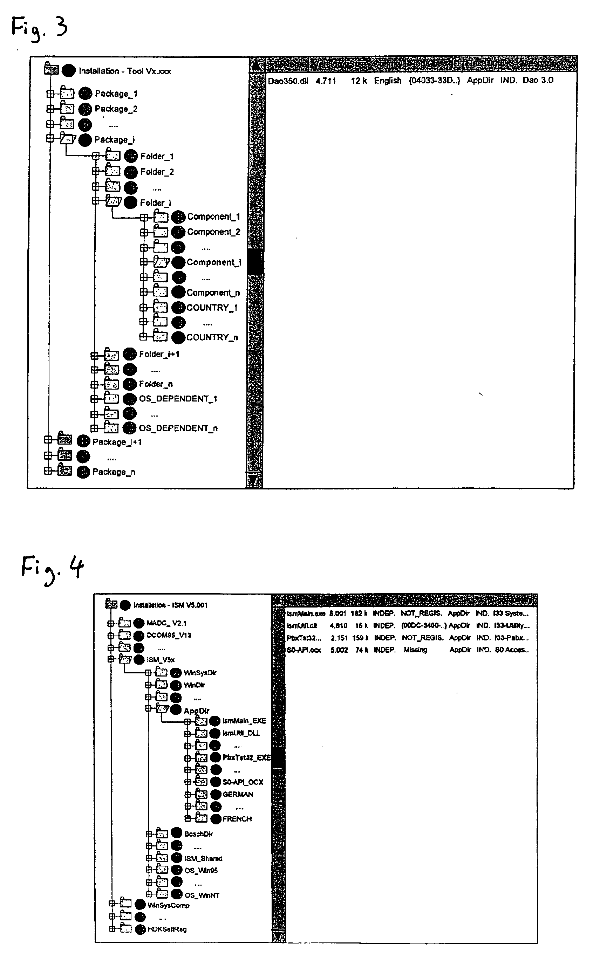

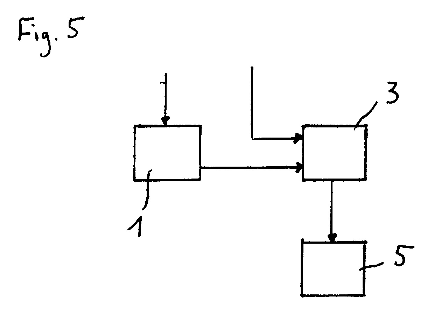

Eine Bedienoberfläche eines PCs stellt in Fig. 3 prinzipiell und in Fig. 4 gemäß der in Fig. 2 gezeigten Eingabedatei das Analyseergebnis bzw. das Ergebnisprotokoll einer beispielhaften Programminstallation grafisch dar. In den Fig. 3, 4 ist dabei die Bedienoberfläche auf der Basis von Treeview und Listview mit den Schlüsseln den in den Fig. 1, 2 gezeigten Eingabe-/Ausgabedateien gezeigt. Die einzelnen HierarchieStufen beinhalten, wie oben beschrieben, alle Informationen zu den Dateien *(Component),* Software-Paketen *(Package)* und Zielverzeichnissen. Betriebssystem- und länderspezifische (COUNTRY) Dateien werden jeweils in eigenen Unterordnern zusammengefasst. Sie befinden sich bei der hier gewählten Hierarchiestruktur quasi eine Ebene unter den betriebssystemund länderunabhängigen Dateien (Fig. 3, 4).

Das Ergebnis der Installation wird dabei im Treeview durch eines der folgenden Symbole angezeigt:
- Objekt korrekt hinzugefügt,
- Update für existierendes Objekt korrekt ausgeführt,
- bestehendes Objekt korrekt entfernt,
oder
- Fehler beim Hinzufügen eines Objektes,
- Fehler beim Update einer existierenden Komponente,
- Fehler beim Entfernen einer bestehenden Komponente.

Dabei ist ein Objekt entweder eine Datei, alle Dateien eines Software-Paketes oder die Gesamtheit aller Dateien in einem Zielverzeichnis.

In Fig. 4 ist die Bedienoberfläche mit praktischen Werten für die obigen Bezeichner gezeigt. Im Listview wird ein detektierter Fehler z.B. durch farbige Hervorhebung der entsprechenden Objekteigenschaften kenntlich gemacht (z.B. "missing", "NOT_REGIS"). Im Listview werden weiterhin stets alle Eigenschaften einer Datei aufgelistet, exakt so wie sie auch in der Eingabedatei in der Analysephase durch die Wissensbasis vorgegeben werden. Damit werden im Listview auch die redundanten Informationen aus dem Treeview wie z.B. Software-Paketname, Zielverzeichnis, OS- und Ländervariante nochmals dargestellt. Dies ist notwendig, um die Gegenüberstellung einer fehlerhaften Objekteigenschaft wie z.B. "falsches Zielverzeichnis" besser visualisieren zu können. Möglich ist es beispielsweise auch, eine Komponente, welche ins falsche Zielverzeichnis installiert wurde, im Treeview an der ermittelten IST-Stelle anzuzeigen. Im Listview könnte dann die SOLL-Stelle zusätzlich in roter Schrift angezeigt werden.

In Fig. 5 ist vereinfacht die Analysevorrichtung für die Korrektheit der Installationen von Windows™-Programmen auf dem PC dargestellt. Die Vorrichtung weist insbesondere eine Speichereinheit 1, eine Bewertungseinheit 3 und eine Ausgabeeinheit 5 auf, die miteinander in Verbindung stehen. In der Speichereinheit 1 ist die Wissensbasis bestehend aus dem Referenzverzeichnis mit allen möglichen gemeinsam genutzten, verträglichen Dateien sowie den SOLL-Vorgaben für das unter Windows™ zu installierende Programm gespeichert. Die Bewertungseinheit 3 vergleicht das Installationsergebnis mit den jeweiligen SOLL-Vorgaben und bewertet den Vergleich auf Korrektheit der Installation. Die Ausgabeeinheit 5 visualisiert das ermittelte Analyseergebnis der Installation/Deinstallation. Die Erfindung wurde am Beispiel von Windows™-Programmen beschrieben, jedoch ist die Erfindung auf jedes Programm, auch auf Programme anderer Betriebssysteme als Windows anwendbar.

## Patentansprüche

1. Verfahren zur Analyse der Korrektheit von Installationen und Deinstallationen von Programmen, insbesondere von Windows™-Programmen, auf einem PC, wobei
eine Wissensbasis mit gemeinsam genutzten Programmbibliotheken, die für ein zu installierendes bzw. deinstallierendes Programm verträglichen sind, und SOLL-Vorgaben für eine korrekte Installation bzw. Deinstallation des Programms generiert wird,
ein Konfigurationszustand des PCs vor einer Installation bzw. Deinstallation des Programms erfasst wird,
ein Konfigurationszustand des PCs nach der Installation bzw. Deinstallation des Programms erfasst wird,
der Konfigurationszustand des PCs vor einer Installation bzw. Deinstallation des Programms, der Konfigurationszustand des PCs nach der Installation bzw. Deinstallation des Programms und die Soll-Vorgaben verglichen und bewertet werden, um eine korrekte Installation bzw. Deinstallation der vom installierten bzw. deinstallierten Programm gemeinsam genutzten Programmbibliotheken festzustellen, und
das Analyseergebnis protokolliert ausgegeben wird.

2. Verfahren nach Anspruch 1, wobei eine Referenz-Installation bzw. Referenz-Deinstallation des Programms protokolliert wird, bei der alle vom Programm verwendeten, gemeinsam genutzten Programmbibliotheken ausgeführt werden, und das Ergebnisprotokoll als SOLL-Vorgaben für die Wissensbasis verwendet wird.

3. Verfahren nach Anspruch 1 oder 2, wobei die SOLL-Vorgaben im gleichen Format wie das protokollierte und bewertete Analyseergebnis vorliegen

4. Verfahren nach einem der vorhergehenden Ansprüche, wobei bei der Installation bzw. Deinstallation einer Programmbibliothek eines Software-Paketes alle anderen Programmbibliotheken des Software-Paketes ebenfalls installiert bzw. deinstalliert werden.

5. Verfahren nach einem der vorhergehenden Ansprüche, wobei die Analyse der Korrektheit auf die Verzeichnisse beschränkt wird, in welchen gemeinsam genutzte Programmbibliotheken installiert bzw. deinstalliert sind.

6. Verfahren nach einem der vorhergehenden Ansprüche, wobei der Verfahrenablauf mit einem einzigen ausführbaren Programm realisiert ist.

7. Verfahren nach einem der vorhergehenden Ansprüche, wobei eine als fehlerhaft erkannte Installation bzw. Deinstallation korrigiert wird.

8. Vorrichtung zur Analyse der Korrektheit von Installationen und Deinstallationen von Programmen, insbesondere von Windows™-Programmen, auf einem PC, wobei die Vorrichtung Konfigurationszustände des PCs vor und nach der Installation bzw. Deinstallation des Programms erfasst und Änderungen protokolliert, umfassend
eine in einer Speichereinheit (1) gespeicherte Wissensbasis mit gemeinsam genutzten Programmbibliotheken, die für ein zu installierendes bzw. deinstallierendes Programm verträglich sind, und SOLL-Vorgaben für eine korrekte Installation bzw. Deinstallation des Programms,
eine Bewertungseinheit (3) zum Vergleich und zur Bewertung des Konfigurationszustands des PCs vor einer Installation bzw. Deinstallation des Programms, des Konfigurationszustands des PCs nach der Installation bzw. Deinstallation des Programms und der Soll-Vorgaben, um eine korrekte Installation bzw. Deinstallation der vom installierten bzw. deinstallierten Programm gemeinsam genutzten Programmbibliotheken festzustellen, und
einer Ausgabeeinheit (5)zum protokollierten Ausgeben des Analyseergebnisses.
